# EUROPEAN PATENT APPLICATION

(11) **EP 2 781 885 A1**
(43) Date of publication of application: **24.09.2014**
(21) Application number: 13184494.6
(22) Date of filing: 16.09.2013
(51) Int. Cl.: G01D 4/00, H04L 12/28, H04L 29/08

(54) **Power measuring system, power measuring device information synchronizing method, and power consumption display method**

(30) Priority: 21.03.2013 JP 2013059055
(71) Applicant: Toshiba Lighting & Technology Corporation, Yokosuka-shi, Kanagawa 237-8510 (JP)
(72) Inventor: Kishimoto, Takuya, Kanagawa 237-8510 (JP); Kitagawa, Koichi, Kanagawa 237-8510 (JP)
(74) Representative: Bokinge, Ole

(57) **Abstract**

A power measuring system (1) according to an embodiment includes a power measuring device (2) configured to measure power consumption of a measurement target provided indoors. The power measuring system (1) includes a gateway (3) provided indoors, communicably connectable to the power measuring device (2), and including a managing unit (35, 35a) configured to manage first power measuring device information indicating the measurement target. The power measuring system (1) includes a server (4) communicably connectable to the gateway (3) and including a server storing unit (42) configured to be capable of storing second power measuring device information indicating the measurement target. If content of one of the first power measuring device information and the second power measuring device information is set or updated, the power measuring system (1) synchronizes content of the other with the set or updated content.

## Description

### FIELD

Embodiments described herein generally relate to a power measuring system, a power measuring device information synchronizing method, and a power consumption display method.

### BACKGROUND

There has been a power measuring system of a server client type in which a server on a network collects and manages power data measured by, for example, a power measuring device set indoors. For example, in the power measuring system of the server client type, the power measuring device and the server are connected via the Internet. In the power measuring system, power measuring device information indicating a power measurement target such as the numbers of branches of power supply wires and names of rooms to which electric power is distributed is set in the server in advance. Thereafter, the power measuring device measures power consumption in the rooms and transmits the measured power consumption to the server via a gateway and the Internet.

For example, in a newly-built house or the like, a power measuring device is often installed together with power supply wires. An Internet line is set up according to a contract of a user. Therefore, since the power measuring device and a server cannot be connected during the installation of the power measuring device, although content of power measuring device information is known, the power measuring device information cannot be set in the server. As a result, for example, after the Internet line is set up, the user has to set the power measuring device information in the server or a constructor has to visit the user again and set the power measuring device information in the server. Such a procedure takes labor and time.

### BRIEF DESCRIPTION OF THE DRAWINGS

FIG. 1 is a diagram schematically showing an example of a power measuring system according to a first embodiment;
FIG. 2 is a diagram showing an example of various patterns of first power measuring device information stored by a setting-pattern storing unit;
FIG. 3 is a diagram for explaining a procedure for updating, according to update information, the first power measuring device information managed indoors;
FIG. 4 is a flowchart for explaining an example of a flow of processing for setting power measuring device information;
FIG. 5 is a flowchart for explaining an example of a flow of processing executed by a gateway when the first power measuring device information is updated;
FIG. 6 is a flowchart for explaining an example of a flow of processing for synchronizing the power measuring device information; and
FIG. 7 is a diagram schematically showing an example of a power measuring system according to a second embodiment.

### DETAILED DESCRIPTION

It is an object of embodiments to provide a power measuring system, a power measuring device information synchronizing method, and a power consumption display method for facilitating setting of power measuring device information.

A power measuring system 1 according to an embodiment explained below includes a power measuring device 2 configured to measure power consumption of a measurement target provided indoors. The power measuring system 1 according to the embodiment includes a gateway 3 provided indoors, communicably connectable to the power measuring device 2, and including a managing unit configured to manage first power measuring device information indicating the measurement target. The power measuring system 1 according to the embodiment includes a server communicably connectable to the gateway 3 and including a server storing unit configured to be capable of storing second power measuring device information indicating the measurement target. If content of one of the first power measuring device information and the second power measuring device information is set or updated, the power measuring system 1 according to the embodiment synchronizes content of the other with the set or updated content.

The gateway 3 according to the embodiment includes a first data generating unit configured to generate, using the first power measuring device information and the power consumption measured by the power measuring device 2, first display data indicating the power consumption in the measurement target. The server includes a second data generating unit configured to generate, using the second power measuring device information stored in the server storing unit and the power consumption measured by the power measuring device 2, second display data indicating the power consumption in the measurement target.

The power measuring device 2 or the gateway 3 included in the power measuring system 1 according to the embodiment further includes an indoor storing unit configured to store the first power measuring device information.

The gateway 3 included in the power measuring system 1 according to the embodiment determines whether the gateway 3 is connectable to the server via the Internet 6 and, if determining that the gateway 3 is connectable to the server, performs connection to the server and synchronizes the content of the other with the set or updated content.

A plurality of patterns are present as the first power measuring device information according to the embodiment. The gateway 3 transmits the first power measuring device information selected out of the plurality of patterns of the first power measuring device information to the server. The server storing unit stores the first power measuring device information received from the gateway 3 as the second power measuring device information.

A power measuring device information synchronizing method according to another embodiment includes measuring power consumption of a measurement target provided indoors. The power measuring device information synchronizing method according to the embodiment includes synchronizing, after content of one of first power measuring device information indicating the measurement target stored in an indoor apparatus and second power measuring device information stored in an outdoor apparatus is set or updated, content of the other with the set or updated content.

A power consumption display method according to still another embodiment includes measuring power consumption of a measurement target provided indoors. The power consumption display method according to the embodiment includes synchronizing, after content of one of first power measuring device information indicating the measurement target stored in an indoor apparatus and second power measuring device information stored in an outdoor apparatus is set or updated, content of the other with the set or updated content. The power consumption display method according to the embodiment includes generating, indoors, using the first power measuring device information and the measured power consumption, first display data indicating the power consumption in the measurement target. The power consumption display method according to the embodiment includes generating, outdoors, using the second power measuring device information and the measured power consumption, second display data indicating the power consumption in the measurement target.

### First Embodiment

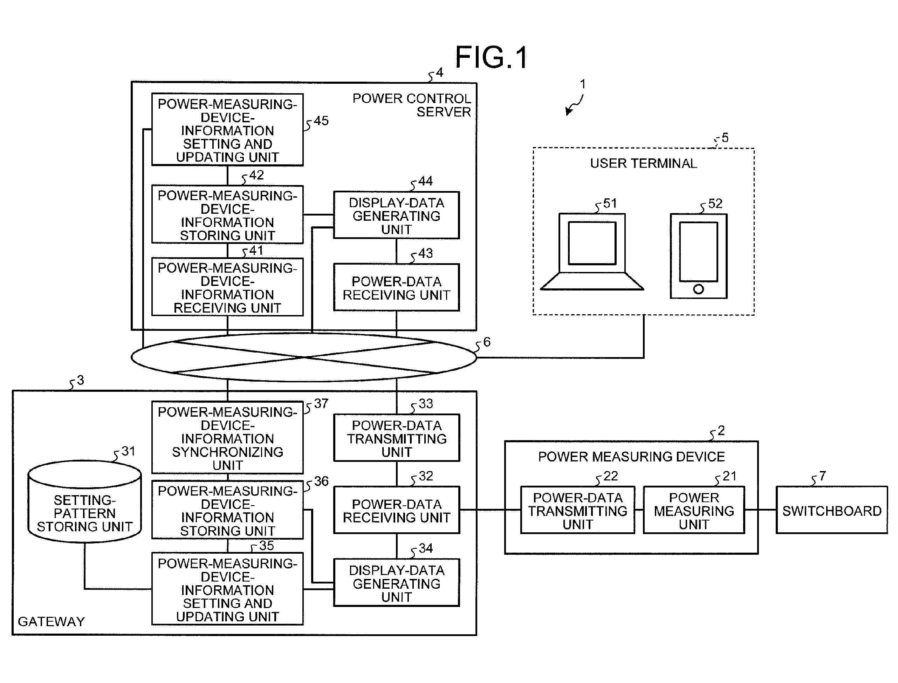

FIG. 1 is a diagram schematically showing an example of a power measuring system according to a first embodiment. The example of the power measuring system according to the embodiment is explained with reference to FIG. 1.

### Example of the configuration of a power measuring system 1

A power measuring system 1 according to the embodiment shown in FIG. 1 includes a power measuring device 2 and a gateway 3 provided indoors and a power control server 4 provided outdoors. The power measuring device 2 shown in FIG. 1 is set together with an indoor switchboard 7 and measures an indoor power consumption. For example, the power measuring device 2 measures amounts of electric currents flowing to branch circuits for power supply wires in the switchboard 7, power supplies in rooms, a power supply that supplies electric power to indoor air conditioning apparatuses, and the like and measures power consumption in measurement targets from the measured current amounts. The power measuring device 2 transmits power data including a measurement result to the gateway 3.

The gateway 3 stores first power measuring device information indicating measurement targets of power consumption and collects indoor power consumption. The gateway 3 can notify a user of the indoor power consumption by causing a user terminal 5 to, for example, display the power consumption of the measurement targets using the stored first power measuring device information and the power consumption received from the power measuring device 2. The gateway 3 transmits the collected power consumption to the power control server 4 via the Internet 6. On the other hand, the power control server 4 stores second power measuring device information indicating the measurement targets for which the power measuring device 2 measures power consumption. The power control server 4 receives the power consumption measured by the power measuring device 2 from the gateway 3 via the Internet 6. Thereafter, the power control server 4 can notify the user of the indoor power consumption by causing the user terminal 5 to, for example, display the power consumption of the measurement targets using the second power measuring device information and the received power consumption. The first power measuring device information indicates information stored indoors and the second power measuring device information indicates information stored outdoors. However, the first power measuring device information and the second power measuring device information include generally the same items. Item contents of the first power measuring device information and the second power measuring device information are made common by a synchronizing method explained below.

The power consumption is notified to, for example, the user terminal 5 used by the user such as a tablet terminal, a PC (Personal Computer), a cellular phone, or a PDA (Personal Data Assistance). The user terminal 5 is connected to the Internet 6 via a wireless LAN (Local Area Network), a wire LAN, a mobile communication network, or the like. The user terminal 5 displays the indoor power consumption measured by the power measuring device 2 using information transmitted from the power control server 4. The switchboard 7 is a switchboard that distributes electric power to the indoor power supplies. The switchboard 7 is a base point of the branches of the power supply wires set indoors. The power measuring device 2 measures power consumption at power supply destinations of the branches on the basis of values of electric currents flowing to the power supply wires branching from the switchboard 7.

The power control server 4 may have a function of performing control of home electric appliances arranged indoors. For example, the power control server 4 may have a function for realizing a system called HEMS (Home Energy Management System). It is desirable to apply "ECHONET" or "ECHONET Lite" of an HEMS standard protocol to communication between the power measuring device 2 and the gateway 3.

In order to manage what are the measurement targets for which the power measuring device 2 measures the power consumption, i.e., the power supply destinations of the branches, power measuring device information indicating the measurement targets is set in the power control server 4. The setting of the power measuring device information is performed in a state in which the power measuring device 2 and the power control server 4 are connected via the Internet 6.

Specifically, the gateway 3 stores first power measuring device information indicating measurement targets for which the power measuring device 2 measures power consumption. For example, the gateway 3 requests a constructor to input the first power measuring device information indicating measurement targets for which the power measuring device 2 measures power consumption. Upon receiving the first power measuring device information, the gateway 3 stores the received first power measuring device information. For example, the gateway 3 receives the first power measuring device information indicating the numbers of branches of the power supply wires and indicating that power supply destinations of the branched power supply wires are a living room, a Japanese-style room, a washroom, a bathroom, air conditioning apparatuses in rooms, and the like.

The gateway 3 determines whether the gateway 3 is accessible to the power control server 4 via the Internet 6. When determining that the gateway 3 is accessible to the power control server 4, the gateway 3 transmits the stored first power measuring device information to the power control server 4. As a result, when the Internet 6 is set up, the power measuring system 1 can automatically set the second power measuring device information in the power control server 4 even if the user does not set power measuring device information.

When an indoor room arrangement is common in condominiums, ready-built houses, or the like, targets for which indoor power measuring devices measure power consumption are considered to be common. Therefore, the gateway 3 stores a plurality of patterns of the first power measuring device information in advance. The gateway 3 causes the constructor to select the first power measuring device information to be applied out of the plurality of patterns of the power measuring device information stored in advance. Thereafter, the gateway 3 stores the selected first power measuring device information and transmits the selected first power measuring device information to the power control server 4 via the Internet 6. As a result, the power measuring system 1 can save labor and time for setting the first power measuring device information and the second power measuring device information from the beginning.

Subsequently, examples of the configurations of the power measuring device 2, the gateway 3, the power control server 4, and the user terminal 5 are explained.

### Example of the configuration of the power measuring device 2

First, an example of the configuration of the power measuring device 2 is explained. The power measuring device 2 includes a power measuring unit 21 and a power-data transmitting unit 22. The power measuring unit 21 measures electric currents flowing through the power supply wires branched from the switchboard 7. The power measuring unit 21 calculates, from the measured electric currents, electric energy of the power supply wires for supplying electric power, i.e., power consumption of power supply destinations, which are measurement targets. Thereafter, the power measuring unit 21 generates power data indicating the calculated power consumption and outputs the generated power data to the power-data transmitting unit 22.

Upon receiving the power data generated by the power measuring unit 21, the power-data transmitting unit 22 transmits the received power data to the gateway 3. For the transmission to the gateway 3, besides a short range wireless communication technique such as Bluetooth (registered trademark), an information communication technique such as wire LAN is used.

### Example of the configuration of the gateway 3

An example of the configuration of the gateway 3 is explained. The gateway 3 includes a setting-pattern storing unit 31, a power-data receiving unit 32, a power-data transmitting unit 33, a display-data generating unit 34, a power-measuring-device-information setting and updating unit 35, a power-measuring-device-information storing unit 36, and a power-measuring-device-information synchronizing unit 37. The setting-pattern storing unit 31 stores various patterns of the first power measuring device information set in the power control server 4.

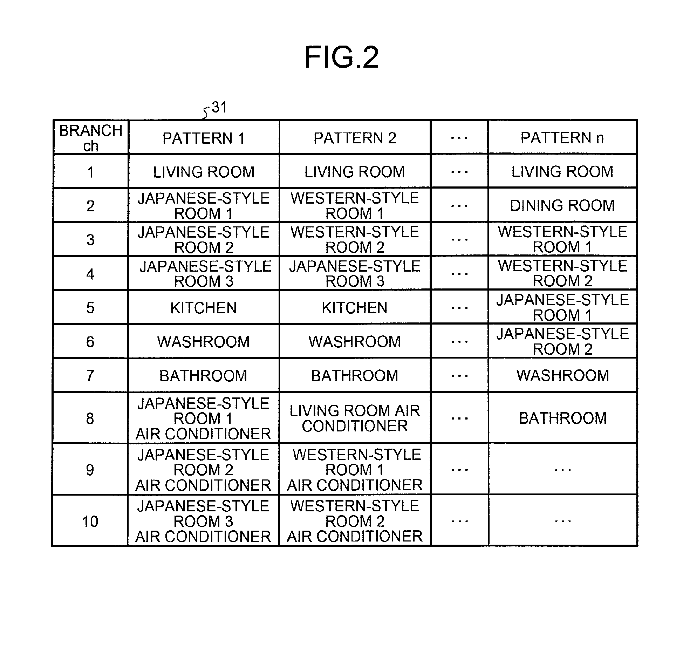

For example, FIG. 2 is a diagram showing an example of the various patterns of the first power measuring device information stored by the setting-pattern storing unit 31. As shown in FIG. 2, the setting-pattern storing unit 31 stores, for each of branch channels (chs) indicating branches of power supply wires, the first power measuring device information in which information indicating power supply destinations of the branches is stored. The setting-pattern storing unit 31 stores a plurality of patterns from a pattern 1 to a pattern n as power measuring device information. For example, referring to the example shown in FIG. 2, the power measuring device information of the pattern 1 indicates that a branch ch "1" supplies electric power to a "living room" and branch chs "2" to "4" supply electric power to a "Japanese-style room 1" to a "Japanese-style room 3". The power measuring device information of the pattern 1 indicates that a branch ch "5" supplies electric power to a "kitchen", a branch ch "6" supplies electric power to a "washroom", and a branch ch "7" supplies electric power to a "bathroom". The power measuring device information of the pattern 1 indicates that branch chs "8" to "10" supply electric power to a "Japanese-style room 1 air conditioner", a "Japanese-style room 2 air conditioner", and a "Japanese-style room 3 air conditioner".

On the other hand, unlike the power measuring device information of the pattern 1, the power measuring device information of the pattern 2 indicates that the branch ch "2" supplies electric power to a "Western-style room 1", the branch ch "3" supplies electric power to a "Western-style room 2", and the branch ch "8" supplies electric power to a "living room air conditioner". The power measuring device information of the pattern n indicates that the branch chs "1" to "8" respectively supply electric power to the "living room", a "dining room", the "Western-style room 1", the "Western-style room 2", the "Japanese-style room 1", the "Japanese-style room 2", the "washroom", and the "bathroom".

The power measuring device information of the patterns shown in FIG. 2 is only an example. Arbitrary branch chs and arbitrary supply destinations can be set. The power measuring device information of the patterns shown in FIG. 2 is only information used as a model and can be rewritten at arbitrary timing.

Referring back to FIG. 1, the power-data receiving unit 32 receives power data from the power measuring device 2. In such a case, the power-data receiving unit 32 outputs the received power data to the power-data transmitting unit 33 and the display-data generating unit 34.

The power-data transmitting unit 33 transmits the power data to the power control server 4 via the Internet 6. For example, upon receiving the power data from the power-data receiving unit 32, the power-data transmitting unit 33 logs in to the power control server 4 via the Internet 6. The login to the power control server 4 is automatically performed using a user ID, a password, and the like set in advance. The power-data transmitting unit 33 transmits the power data to the power control server 4.

The display-data generating unit 34 generates a setting screen for the first power measuring device information and first display data for displaying power consumption measured by the power measuring device 2. For example, the display-data generating unit 34 reads out the selected first power measuring device information from the power-measuring-device-information storing unit 36. The display-data generating unit 34 receives the power data from the power-data receiving unit 32. Upon receiving a request for displaying power consumption from the user terminal 5 via a Bluetooth or the like, the display-data generating unit 34 generates first display data for displaying power consumption measured by the power measuring device 2 for the measurement targets. Thereafter, the display-data generating unit 34 transmits the generated first display data to the user terminal 5 and a terminal used by the constructor and causes the user terminal 5 and the terminal to display the first display data. Communication between the user terminal 5 and the display-data generating unit 34 may be directly performed via the Bluetooth or the like or may be performed via the Internet 6.

When selecting the first power measuring device information, the display-data generating unit 34 receives the power measuring device information stored in the setting-pattern storing unit 31 from the power-measuring-device-information setting and updating unit 35. The display-data generating unit 34 generates selection screen data for displaying a selection screen for selecting the first power measuring device information set in the power control server 4 and transmits the generated display data to the user terminal 5 and the terminal used by the constructor via the Bluetooth or the like.

The power-measuring-device-information setting and updating unit 35 stores, among the plurality of patterns of the power measuring device information stored by the setting-pattern storing unit 31, the first power measuring device information selected by the constructor or the like in the power-measuring-device-information storing unit 36. For example, the power-measuring-device-information setting and updating unit 35 outputs the patterns of the power measuring device information stored by the setting-pattern storing unit 31 to the display-data generating unit 34. When the first power measuring device information to be set is selected via the user terminal 5 or the terminal used by the constructor, the power-measuring-device-information setting and updating unit 35 stores the selected first power measuring device information in the power-measuring-device-information storing unit 36.

The power-measuring-device-information setting and updating unit 35 may receive update for the selected power measuring device information. For example, the power-measuring-device-information setting and updating unit 35 generates update screen data for displaying an update screen for updating the selected power measuring device information and transmits the update screen data to the user terminal 5 and the terminal used by the constructor via the display-data generating unit 34. The power-measuring-device-information setting and updating unit 35 receives the update for the selected power measuring device information, for example, addition, deletion, or name change of the measurement targets or addition of a branch ch. Thereafter, the power-measuring-device-information setting and updating unit 35 stores, in the power-measuring-device-information storing unit 36, the first power measuring device information that reflects the received update.

The power-measuring-device-information storing unit 36 is a storing unit configured to store the first power measuring device information selected by the constructor and is, for example, a nonvolatile memory such as a flash memory.

The power-measuring-device-information synchronizing unit 37 performs synchronization of the first power measuring device information managed indoors and the power measuring device information managed by the power control server 4. For example, when the second power measuring device information is not set in the power control server 4, for example, during installation of the power measuring device 2, the power-measuring-device-information synchronizing unit 37 executes processing explained below. First, the power-measuring-device-information synchronizing unit 37 determines whether the power-measuring-device-information synchronizing unit 37 is accessible to the power control server 4 via the Internet 6. When the power-measuring-device-information synchronizing unit 37 is accessible to the power control server 4, the power-measuring-device-information synchronizing unit 37 transmits the first power measuring device information stored by the power-measuring-device-information storing unit 36 to the power control server 4 via the Internet 6. The power control server 4 sets, in the power control server 4 itself, the received power measuring device information as the second power measuring device information.

When the power measuring device information stored in the power-measuring-device-information storing unit 36 is updated according to update operation from the user terminal 5, the power-measuring-device-information synchronizing unit 37 determines whether the power-measuring-device-information synchronizing unit 37 is accessible to the power control server 4 via the Internet 6. When the power-measuring-device-information synchronizing unit 37 is accessible to the power control server 4, the power-measuring-device-information synchronizing unit 37 transmits the power measuring device information stored by the power-measuring-device-information storing unit 36 to the power control server 4 via the Internet 6. The power control server 4 updates, in the power control server 4 itself, the received power measuring device information as the second power measuring device information.

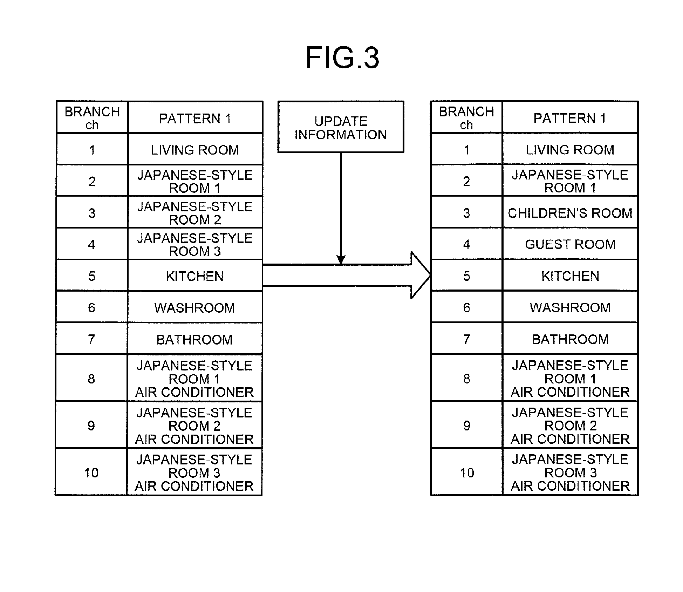

When the power-measuring-device-information synchronizing unit 37 receives update information for updating the first power measuring device information from the power control server 4 via the Internet 6, the power-measuring-device-information synchronizing unit 37 updates, according to the received update information, the first power measuring device information stored by the power-measuring-device-information storing unit 36. FIG. 3 is a diagram for explaining processing for updating, according to the update information, the first power measuring device information managed indoors. For example, in an example shown on the left side in FIG. 3, the power measuring device information of the pattern 1 is stored in the power-measuring-device-information storing unit 36.

The power control server 4 receives, from the user terminal 5, an instruction for updating, in the power measuring device information, the power supply destination of the branch ch "3" to a "children's room" and changing the power supply destination of the branch ch "4" to a "guest room". In such a case, the power control server 4 transmits, to the gateway 3, update information indicating that, in the second power measuring device information, the power supply destination of the branch ch "3" is updated to the "children's room" and the power supply destination of the branch ch "4" is updated to the "guest room". On the other hand, the power-measuring-device-information synchronizing unit 37 updates, according to the update information received from the power control server 4, the second power measuring device information stored by the power-measuring-device-information storing unit 36 as shown on the right side in FIG. 3. As a result, the gateway 3 can synchronize the first power measuring device information managed by the gateway 3 and the power measuring device information managed by the power control server 4.

When the user terminal 5 accesses the power control server 4 for the first time, the power-measuring-device-information synchronizing unit 37 requests the user terminal 5 to input a user ID and a password for logging in to the power control server 4. The power-measuring-device-information synchronizing unit 37 logs in to the power control server 4 using the user ID and the password input by the user terminal 5 and transmits power measuring device information to set the second power measuring device information in the power control server 4.

The respective kinds of processing by the display-data generating unit 34, the power-measuring-device-information setting and updating unit 35, and the power-measuring-device-information synchronizing unit 37 are realized in, for example, a simple ASP (Application Service Provider) format. That is, the gateway 3 displays, via the Bluetooth or the like, the selection screen for power measuring device information, the setting screen for power measuring device information, the login screen to the power control server 4, and the like on the user terminal 5 and the terminal device used by the constructor. The gateway 3 executes the various kinds of processing according to an input from the user terminal 5 and the terminal device used by the constructor. Example of the configuration of the power control server 4

An example of the configuration of the power control server 4 is explained. The power control server 4 is set outdoors and includes a power-measuring-device-information receiving unit 41, a power-measuring-device-information storing unit 42, a power-data receiving unit 43, a display-data generating unit 44, and a power-measuring-device-information setting and updating unit 45.

The power-measuring-device-information receiving unit 41 receives power measuring device information from the gateway 3 via the Internet 6. In such a case, the power-measuring-device-information receiving unit 41 stores the received power measuring device information in the power-measuring-device-information storing unit 42.

The power-measuring-device-information storing unit 42 is a storing unit configured to store the second power measuring device information and is, for example, a flash memory, a HDD (Hard Disk Drive), or a SSD (Solid State Drive).

The power-data receiving unit 43 receives, via the Internet 6, power data indicating power consumption measured by the power measuring device 2. The power-data receiving unit 43 outputs the received power data to the display-data generating unit 44.

The display-data generating unit 44 generates, according to a request from the user terminal 5, second display data for causing the user terminal 5 to display the power consumption measured by the power measuring device 2. For example, the display-data generating unit 44 receives, from the power-data receiving unit 43, the power data indicating the power consumption measured by the power measuring device 2. Upon receiving a display request for the power consumption from the user terminal 5 via the Internet 6, the display-data generating unit 44 reads out the second power measuring device information stored by the power-measuring-device-information storing unit 42.

The display-data generating unit 44 generates, using the received power data and the read-out second power measuring device information, second display data for causing the user terminal 5 to display power consumption in the branch chs. Thereafter, the display-data generating unit 44 transmits the generated second display data to the user terminal 5 via the Internet 6.

The power-measuring-device-information setting and updating unit 45 performs setting or update of the second power measuring device information in response to a request from the user terminal 5. For example, when the power-measuring-device-information setting and updating unit 45 is connected to the power measuring device 2 via the gateway 3 and the Internet 6, the power-measuring-device-information setting and updating unit 45 generates setting image data for causing the user terminal 5 to display a setting screen for performing setting of the second power measuring device information and transmits the generated setting image data to the user terminal 5. Upon receiving setting content of the second power measuring device information from the user terminal 5, the power-measuring-device-information setting and updating unit 45 stores the second power measuring device information set according to the received setting content in the power-measuring-device-information storing unit 42.

For example, the power-measuring-device-information setting and updating unit 45 generates update image data for causing the user terminal 5 to display an update screen for performing update of the second power measuring device information and transmits the generated update image data to the user terminal 5. Upon receiving update content of the second power measuring device information from the user terminal 5, the power-measuring-device-information setting and updating unit 45 updates, according to the received update content, the second power measuring device information stored by the power-measuring-device-information storing unit 42. The power-measuring-device-information setting and updating unit 45 generates update information indicating the update content and transmits the generated update information to the gateway 3. As a result, the gateway 3 can synchronize the first power measuring device information managed by the gateway 3 and the second power measuring device information managed by the power control server 4.

The respective kinds of processing by the display-data generating unit 44 and the power-measuring-device-information setting and updating unit 45 are realized in, for example, an ASP format. That is, the power control server 4 displays, via the Internet 6, the update screen for power measuring device information, the display screen for power consumption, and the like on the user terminal 5. The power control server 4 may display, in the same operation screen by the ASP, for example, a control screen for various home electric appliances set indoors and indoor temperature.

### Example of the user terminal 5

The user terminal 5 is, for example, a tablet terminal, a PC (Personal Computer), a cellular phone, or a PDA (Personal Data Assistance) and is connected to the Internet 6 via a wireless LAN (Local Area Network), a wire LAN, or the like. In the example shown in FIG. 1, for example, the user terminal 5 is a PC 51 and a PDA 52. The user terminal 5 logs in to the power control server 4 using a user ID, a password, and the like and performs display of power consumption measured by the power measuring device 2 and update of power measuring device information.

### Flow of processing executed by the power measuring system 1

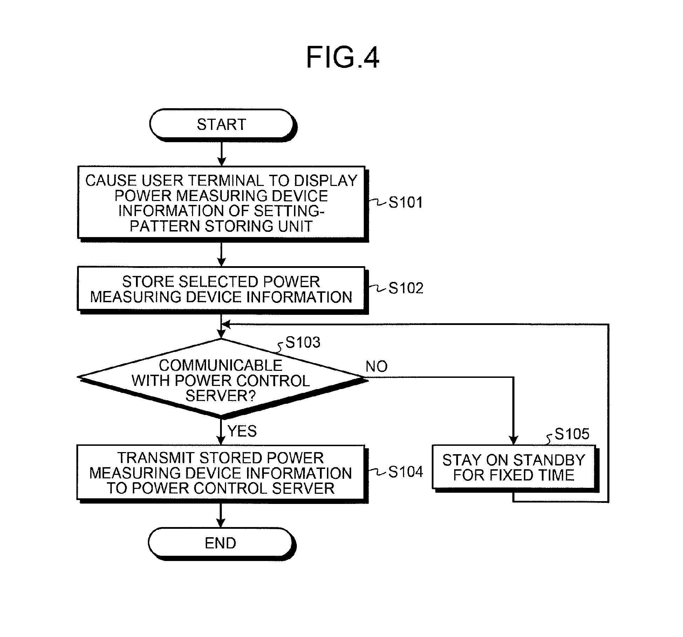

A flow of processing executed by the gateway 3 when the power control server 4 sets power measuring device information is explained with reference to FIG. 4. FIG. 4 is a flowchart for explaining an example of a flow of processing for setting power measuring device information.

As shown in FIG. 4, the gateway 3 causes the user terminal 5 to display the first power measuring device information stored by the setting-pattern storing unit 31 (Act S101). The gateway 3 may communicate with the user terminal 5 via the Internet 6 or may directly communicate with the user terminal 5 not via the Internet 6. Subsequently, the gateway 3 stores the first power measuring device information selected by the constructor (Act S102). The gateway 3 determines whether the gateway 3 is communicable with the power control server 4 (Act S103). When the gateway 3 is communicable with the power control server 4 (affirmative in Act S103), the gateway 3 transmits the stored first power measuring device information to the power control server 4 (Act S104) and ends the processing.

On the other hand, for example, when the user does not have a contract with an ISP (Internet Service Provider) and the gateway 3 is not communicable with the power control server 4 (negative in Act S103), the gateway 3 stays on standby for a fixed time (Act S105). Thereafter, the gateway 3 determines again whether the gateway 3 can communicate with the power control server 4 (Act S103).

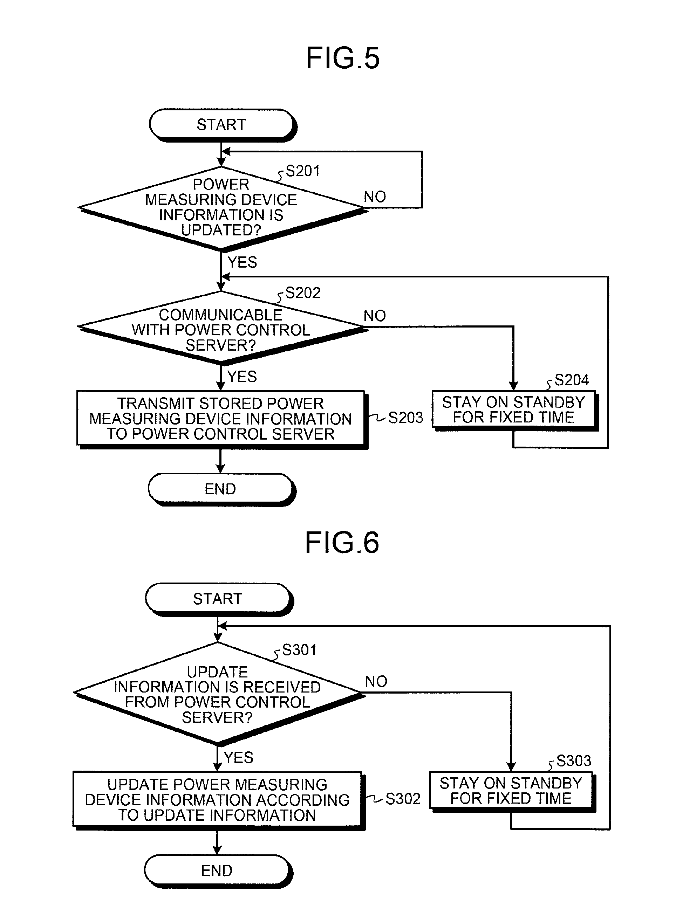

A flow of processing executed by the gateway 3 when the gateway 3 receives update of the first power measuring device information is explained with reference to FIG. 5. FIG. 5 is a flowchart for explaining an example of the flow of the processing executed by the gateway 3 when the first power measuring device information is updated. Processing in Acts S202 to S204 in FIG. 5 is the same as the processing in Acts S103 to S105 in FIG. 4. Therefore, explanation of the processing is omitted.

For example, the gateway 3 determines whether the first power measuring device information is updated by the user (Act S201). When determining that the first power measuring device information is updated by the user (affirmative in Act S201), the gateway 3 executes processing in Act S202. On the other hand, when determining that the first power measuring device information is not updated by the user (negative in Act S201), the gateway 3 executes the processing in Act S201 again.

A flow of processing for synchronizing content of the first power measuring device information managed by the gateway 3 and content of the second power measuring device information managed by the power control server 4 is explained. FIG. 6 is a flowchart for explaining an example of the flow of the processing for synchronizing power measuring device information.

As shown in FIG. 6, the gateway 3 determines whether update information is received from the power control server 4 (Act S301). When determining that update information is received from the power control server 4 (affirmative in Act S301), the gateway 3 updates, according to the update information, the stored first power measuring device information (Act S302) and ends the processing. On the other hand, when determining that update information is not received from the power control server 4 (negative in Act S301), the gateway 3 stays on standby for a fixed time (Act S303). Thereafter, the gateway 3 determines again whether update information is received from the power control server 4 (Act S301).

### Effects of the first embodiment

As explained above, the power measuring system 1 includes the power measuring device 2 configured to measure power consumption of measurement targets provided indoors. The power measuring system 1 includes the gateway 3 provided indoors, communicably connectable to the power measuring device 2, and including the power-measuring-device-information setting and updating unit 35 configured to manage the first power measuring device information indicating the measurement targets. The power measuring system 1 includes the power control server 4 communicably connectable to the gateway 3 and including the power-measuring-device-information storing unit 42 capable of storing the second power measuring device information indicating the measurement targets. When content of one of the first power measuring device information and the second power measuring device information is set or updated, the power measuring system 1 synchronizes content of the other with the set or updated content. Therefore, the power measuring system 1 can facilitate setting and update of power measuring device information.

The gateway 3 includes the display-data generating unit 34 configured to generate, using the first power measuring device information and the power consumption measured by the power measuring device 2, first display data indicating the power consumption in the measurement targets. The power control server 4 includes the display-data generating unit 44 configured to generate, using the second power measuring device information and the power consumption measured by the power measuring device 2, second display data indicating the power consumption in the measurement targets. Therefore, the power measuring system 1 can cause the display terminal 5 to display the power consumption irrespective of which of the gateway 3 and the power control server 4 the user accesses.

The gateway 3 includes the power-measuring-device-information storing unit 36 configured to store the first power measuring device information. The gateway 3 synchronizes the first power measuring device information stored in the power-measuring-device-information storing unit 36 with the second power measuring device information managed by the power control server 4. Therefore, the gateway 3 can reflect update performed by the user for the second power measuring device information managed by the power control server 4 on the first power measuring device information stored by the power-measuring-device-information storing unit 36.

The gateway 3 determines whether the gateway 3 is connectable to the power control server 4 via the Internet 6. When determining that the gateway 3 is connectable to the power control server 4, the gateway 3 executes processing explained below. The gateway 3 connects itself to the power control server 4 and synchronizes the first power measuring device information stored by the gateway 3 and the second power measuring device information stored by the power control server 4.

Therefore, the gateway 3 can facilitate setting of power measuring device information. For example, in a newly-built house or the like, since the Internet 6 cannot be used, power measuring device information cannot be set in the power control server 4. However, in the power measuring system 1, the gateway 3 performs setting and storage of the first power measuring device information. When the gateway 3 becomes accessible to the power control server 4 via the Internet 6, the gateway 3 transmits the stored first power measuring device information to the power control server 4. As a result, when the Internet 6 is set up, the power measuring system 1 can save labor and time of the user setting the first power measuring device information and the second power measuring device information and labor and time of the constructor visiting the user again and setting the first power measuring device information and the second power measuring device information.

The gateway 3 transmits the first power measuring device information selected out of the plurality of patterns of the first power measuring device information to the power control server 4. The power control server 4 stores the first power measuring device information as the second power measuring device information. Therefore, the gateway 3 can further facilitate setting of the first power measuring device information and the second power measuring device information.

### Second Embodiment

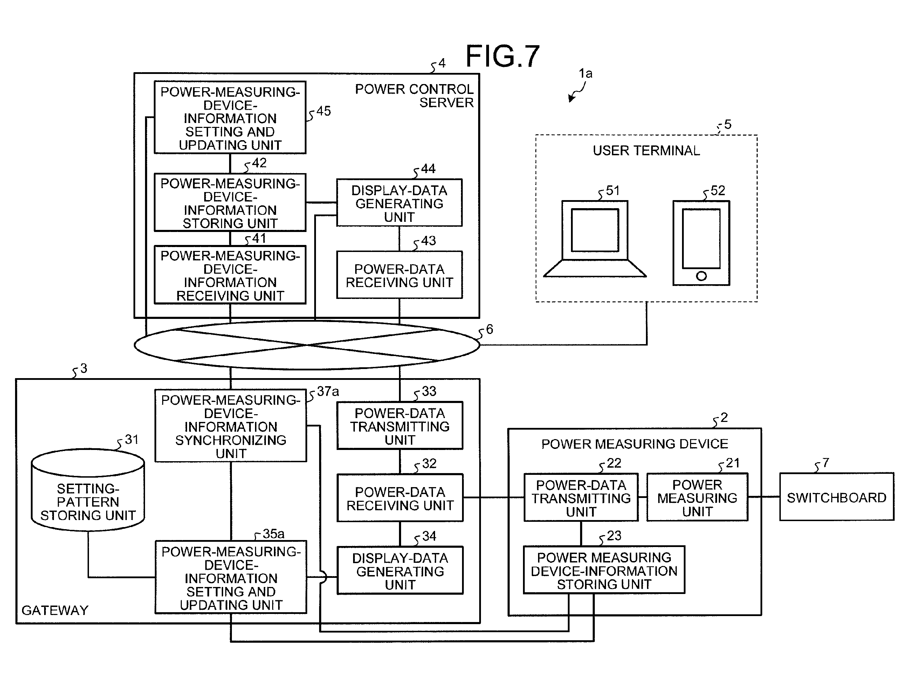

A second embodiment is explained below. A power measuring system 1a according to the second embodiment causes, rather than the gateway 3, the power measuring device 2 to store the first power measuring device information managed indoors. The power measuring system 1a according to the second embodiment is explained with reference to FIG. 7. In the second embodiment, components same as the components in the first embodiment are denoted by the same reference numerals and signs and redundant explanation of the components is omitted.

FIG. 7 is a diagram schematically showing an example of the power measuring system 1a according to the second embodiment. As shown in FIG. 7, the power measuring device 2 includes a power-data transmitting unit 22a and a power-measuring-device-information storing unit 23 configured to play functions same as the functions of the power-measuring-device-information storing unit 36 shown in FIG. 1. The gateway 3 includes a power-measuring-device-information setting and updating unit 35a and a power-measuring-device-information synchronizing unit 37a.

Under such a configuration, for example, the power-measuring-device-information setting and updating unit 35a stores the first power measuring device information selected by the constructor in the power-measuring-device-information storing unit 23 included in the power measuring device 2. The power-data transmitting unit 22a transmits the first power measuring device information stored by the power-measuring-device-information storing unit 23 to the gateway 3 together with power data indicating power consumption measured by the power measuring unit 21. The power-data receiving unit 32 outputs the received power data and the received first power measuring device information to the display-data generating unit 34.

When the first power measuring device information is set or updated, the power-measuring-device-information synchronizing unit 37a determines whether the power-measuring-device-information synchronizing unit 37a is connectable to the power control server 4 via the Internet 6. When determining that the power-measuring-device-information synchronizing unit 37a is connectable to the power control server 4, the power-measuring-device-information synchronizing unit 37a acquires the first power measuring device information stored by the power-measuring-device-information storing unit 23 and transmits the acquired first power measuring device information to the power control server 4. Upon receiving update information, the power-measuring-device-information synchronizing unit 37 updates, according to the received update information, the first power measuring device information stored by the power-measuring-device-information storing unit 23.

### Effects of the second embodiment

As explained above, in the power measuring system 1a, the power measuring device 2 includes the power-measuring-device-information storing unit 23 configured to store the first power measuring device information. Therefore, even when the gateway 3 is broken down and a new gateway 3 is set, the power measuring system 1a can cause the user terminal 5 to display power consumption without setting the first power measuring device information again.

### Other embodiments

In the power measuring systems 1 and 1a explained above, the power consumption measured by the power measuring device 2 is transmitted to the user terminal 5. However, embodiments are not limited to this. For example, when a solar power generation apparatus is set indoors, the power measuring device 2 may measure, together with the power consumption of the branch chs, electric energy generated by the solar power generation apparatus and generate power data indicating the power consumption and the generated electric energy. In such a case, a term of the solar power generation apparatus is added to the first power measuring device information and the second power measuring device information.

The power measuring systems 1 and 1a may have a function of executing, for example, control of home electric appliances set indoors other than the display of the power consumption. For example, the gateway 3 collects temperature information of rooms from measuring equipment that measures room temperatures of the rooms and transmits the collected temperature information to the power control server 4. The power control server 4 causes the user terminal 5 to display the temperature information received from the gateway 3 together with the power consumption measured by the power measuring device 2.

When the power control server 4 receives an operation instruction for an air conditioning apparatus via the user terminal 5, the power control server 4 transmits the received operation instruction to the gateway 3. In such a case, the gateway 3 performs control of the air conditioning apparatus according to the received operation instruction.

The first power measuring device information and the second power measuring device information may include, for example, temperature setting for rooms at power supply destinations, various kinds of setting information, and current temperatures of the rooms in addition to information indicating the power supply destinations. In such a case, the power control server 4 can cause the user terminal 5 to display the various kinds of information included in the first power measuring device information and the second power measuring device information. Therefore, it is possible to enable the user to finely visually recognize indoor information.

In the examples explained in the embodiments, the first power measuring device information and the second power measuring device information are synchronized when the power measuring device information is set in the power control server 4 and when the first power measuring device information is updated. However, timing when the power measuring systems 1 and 1a synchronize the first power measuring device information and the second power measuring device information is not limited to this. The power measuring systems 1 and 1a may synchronize indoor power measuring device information and outdoor power measuring device information at arbitrary timing. For example, the power measuring systems 1 and 1a may synchronize the indoor power measuring device information and the outdoor power measuring device information at arbitrary timing, for example, when member registration for a service provided by the power control server 4 is performed, when login to the power control server 4 is successful, when a synchronization instruction is received from the user, and a predetermined time interval.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power measuring system (1) comprising:
a power measuring device (2) configured to measure power consumption of a measurement target provided indoors;
a gateway (3) provided indoors, communicably connectable to the power measuring device (2), and including a managing unit (35, 35a) configured to manage first power measuring device information indicating the measurement target; and
a server (4) communicably connectable to the gateway (3) and including a server storing unit (42) configured to be capable of storing second power measuring device information indicating the measurement target, wherein
if content of one of the first power measuring device information and the second power measuring device information is set or updated, the power measuring system synchronizes content of the other with the set or updated content.

2. The system (1) according to claim 1, wherein
the gateway (3) includes a first data generating unit (34) configured to generate, using the first power measuring device information managed by the managing unit (35, 35a) and the power consumption measured by the power measuring device (2), first display data indicating the power consumption in the measurement target, and
the server (4) includes a second data generating unit (44) configured to generate, using the second power measuring device information stored in the server storing unit (42) and the power consumption measured by the power measuring device (2), second display data indicating the power consumption in the measurement target.

3. The system (1) according to claim 1 or 2, wherein the power measuring device (2) or the gateway (3) includes an indoor storing unit (23, 36) configured to store the first power measuring device information.

4. The system (1) according to any one of claims 1 to 3, wherein the gateway (3) determines whether the gateway (3) is connectable to the server (4) via an Internet (6) and, if determining that the gateway (3) is connectable to the server (4), performs connection to the server (4) and synchronizes the content of the other with the set or updated content.

5. The system (1) according to any one of claims 1 to 4, wherein
a plurality of patterns are present as the first power measuring device information,
the gateway (3) transmits the first power measuring device information selected out of the plurality of patterns of the first power measuring device information to the server (4), and
the server storing unit (42) stores the first power measuring device information received from the gateway (3) as the second power measuring device information.

6. A power measuring device information synchronizing method comprising:
measuring power consumption of a measurement target provided indoors; and
synchronizing, after content of one of first power measuring device information indicating the measurement target stored in an indoor apparatus and second power measuring device information stored in an outdoor apparatus is set or updated, content of the other with the set or updated content.

7. The method according to claim 6, further comprising:
generating, using the first power measuring device information stored in the indoor apparatus and the measured power consumption, first display data indicating the power consumption in the measurement target; and
generating, using the second power measuring device information stored in the outdoor apparatus and the measured power consumption, second display data indicating the power consumption in the measurement target.

8. The method according to claim 6 or 7, wherein the synchronizing includes synchronizing the content of the first power measuring device information stored in the indoor apparatus and the content of the second power measuring device information stored in the outdoor apparatus, the indoor apparatus is a power measuring device (2) configured to measure the power consumption of the measurement target or a gateway (3) communicably connectable to the power measuring device (2), and configured to generate, using the first power measuring device information and the power consumption measured by the power measuring device (2), the first display data indicating the power consumption in the measurement target.

9. The method according to any one of claims 6 to 8, further comprising:
determining whether the indoor apparatus (2, 3) is connectable to the outdoor apparatus via an Internet (6), wherein
the synchronizing includes performing connection of the indoor apparatus (2, 3) and the outdoor apparatus if it is determined that the indoor apparatus (2, 3) is connectable to the outdoor apparatus, and synchronizing the content of the other with the set or updated content.

10. The method according to any one of claims 6 to 9, further comprising:
transmitting, by the indoor apparatus, the first power measuring device information selected out of a plurality of patterns of the first power measuring device information to the outdoor apparatus; and
storing, by the outdoor apparatus, the first power measuring device information received from the indoor apparatus as the second power measuring device information.
